# DEMANDE DE BREVET EUROPEEN

(11) **EP 3 112 294 A2**
(43) Date de publication de la demande: **04.01.2017**
(21) Numéro de dépôt: 16177638.0
(22) Date de dépôt: 01.07.2016
(51) Int. Cl.: B65G 1/04, B65G 1/08, B65G 13/12

(54) **DISPOSITIF DE STOCKAGE ET DE TRANSFERT**

(30) Priorité: 01.07.2015 FR 1556226
(71) Demandeur: Fabries SAS, 81500 Lavaur (FR)
(72) Inventeur: FABRIES, Jean-Michel, 81500 LAVAUR (FR)
(74) Mandataire: Cabinet Plasseraud

(57) **Abrégé**

Ce dispositif de stockage et de transfert de bacs (12) comporte :
- une étagère (2) présentant des logements (10) disposés côte à côte et destinés chacun à recevoir un bac (12) par une ouverture de chargement/déchargement, chaque logement (10) comportant un chemin de roulement (24) inclinable entre une première position dite de repos et une seconde position inclinée vers l'ouverture de chargement/déchargement,
- des moyens (4) permettant d'apporter un bac (12) face à un logement (10), comportant, un convoyeur (20) mobile permettant de déplacer un bac (12) dans une direction sensiblement horizontale et des moyens permettant de déplacer le convoyeur (20).

Le convoyeur (20) mobile est pourvu d'un actionneur (44). À chaque chemin de roulement (24) est associé un mécanisme d'inclinaison permettant de faire passer le chemin de roulement (24) correspondant de sa première position à sa seconde position et muni de moyens de coopération avec l'actionneur (44).

## Description

La présente invention concerne un dispositif de stockage et de transfert de bacs ou tout autre type de réceptacles.

L'objet de l'invention est destiné notamment au traitement de commandes de marchandises au sein par exemple d'une société de vente par Internet. Toutefois, comme il apparaitra à l'homme du métier, d'autres applications peuvent être envisagées. Ainsi par exemple l'invention pourrait être mise en oeuvre pour la gestion d'un stock de pièces, par exemple des pièces détachées, dans tout type d'industrie.

Dans le domaine du commerce sur Internet, un client fait une commande en ligne. Il convient alors de préparer les articles commandés pour les faire parvenir au client. Dans certains cas, le client vient prendre les produits sur un lieu de stockage/vente, dans d'autres cas les produits sont expédiés depuis le site marchand.

La préparation de la commande peut se faire de diverses manières. Il peut s'agir d'un système entièrement automatisé qui permet de collecter dans un stock des articles pour les disposer dans un bac ou similaire. À l'inverse, il peut s'agir d'une préparation manuelle dans laquelle un opérateur/préparateur muni d'un chariot passe dans des rayonnages et prépare la commande un peu de la même manière qu'un client fait ses courses dans un supermarché.

Dans tous les cas, il se pose ensuite le problème de la gestion des commandes préparées entre le moment où tous les éléments commandés ont été regroupés dans un même bac et le moment où ces éléments sont expédiés ou remis au client.

Généralement, une zone de stockage est prévue et un système de gestion des commandes gère également les manutentions dans cette zone. Il peut s'agir d'une gestion empirique ou bien de type FIFO (du sigle anglais First In, First Out, soit en français : premier entré, premier sorti) ou d'un autre type encore.

La présente invention a pour but de fournir des moyens permettant d'optimiser une gestion de stock, par exemple un stock de lots divers correspondant à des commandes d'articles, permettant de faciliter le travail des opérateurs tant lorsqu'une commande est amenée vers la zone de stockage que lorsque cette commande doit être retirée de ladite zone de stockage pour être délivrée ou expédiée.

De préférence, les moyens proposés seront de conception simple

À cet effet, la présente invention propose un dispositif de stockage et de transfert de bacs (ou tout autre réceptacle) comportant :
- une étagère présentant des logements disposés côte à côte sur au moins deux niveaux et destinés chacun à recevoir un bac par une ouverture de chargement/déchargement, chaque logement comportant un chemin de roulement monté pivotant autour d'un axe sensiblement horizontal et inclinable entre une première position dite de repos et une seconde position inclinée vers l'ouverture de chargement/déchargement,
- des moyens permettant d'apporter un bac face à un logement, comportant, d'une part, un convoyeur mobile permettant de déplacer un bac dans une direction sensiblement horizontale et, d'autre part, des moyens permettant de déplacer le convoyeur dans un plan sensiblement perpendiculaire à la direction de déplacement d'un bac sur le convoyeur

Selon la présente invention, le convoyeur mobile est pourvu d'un actionneur, et à chaque chemin de roulement est associé un mécanisme d'inclinaison permettant de faire passer le chemin de roulement correspondant de sa première position à sa seconde position, ledit mécanisme étant muni de moyens de coopération avec l'actionneur.

Cette structure présente l'avantage d'être simple et de ce fait aussi facilement automatisable. Le fait de simplement prévoir d'incliner un bac pour le faire sortir de son logement en coopération avec un convoyeur est avantageux car il permet d'avoir avec des moyens simples une action rapide et facilement commandable.

Selon une première variante, le mécanisme d'inclinaison comporte un ensemble basculant disposé sous le chemin de roulement et monté mobile en rotation par rapport à un axe parallèle à l'axe chemin de roulement, le chemin de roulement venant en appui ledit ensemble basculant formant une came de telle sorte que lorsqu'il passe d'une première position angulaire à une seconde position angulaire il commande le passage du chemin de roulement de sa première position dite de repos à sa seconde position. Dans cette variante, on peut aussi prévoir que le mécanisme d'inclinaison est en outre muni d'une tige de commande reliée à l'ensemble basculant et destinée à coopérer avec l'actionneur.

Avantageusement, pour favoriser le retour en position de repos, le mécanisme d'inclinaison comporte un contrepoids tendant à le ramener dans sa première position angulaire.

Selon une variante de réalisation du dispositif de transfert et de stockage l'ensemble basculant peut être une came.

Une variante préférée prévoit que l'ensemble basculant présente deux flasques latéraux parallèles reliés entre eux par au moins un axe portant au moins une roulette destinée à venir en contact avec le chemin de roulement.

Dans une forme de réalisation du dispositif de stockage et de transfert proposé ici, les moyens permettant de déplacer le convoyeur comportent par exemple un chariot mobile horizontalement selon une direction et portant un mât vertical le long duquel le convoyeur peut se déplacer. Pour un meilleur guidage de ce chariot mobile horizontalement, ce dernier se déplace avantageusement sur des rails.

Un dispositif de transfert et de stockage tel que décrit ci-dessus peut également comporter un chariot motorisé présentant :
- un châssis sur lequel est ménagée une plateforme permettant de recevoir un opérateur,
- des moyens de commande disposés d'un côté de la plateforme, et
- du côté de la plateforme opposé au côté muni des moyens de commande, au moins deux logements disposés l'un au-dessus de l'autre et munis chacun d'un chemin de roulement et de moyens de blocage pour un bac disposé sur le chemin de roulement.

Dans un mode de réalisation préféré, il est prévu que chaque chemin de roulement du chariot soit monté sur des glissières de manière à pouvoir se déplacer entre une position dite de transport dans laquelle le chemin de roulement est au-dessus du châssis et une position dite de transfert dans laquelle le chemin de roulement est en porte-à-faux à l'extérieur du châssis. Ce mode de réalisation facilite la coopération du chariot motorisé avec le convoyeur.

Dans une forme de réalisation préférée qui permet d'optimiser l'utilisation de la surface disponible, il est prévu que le dispositif de transfert et de stockage comporte deux étagères disposées en vis-à-vis, les moyens permettant d'apporter un bac face à un logement étant disposés entre les deux étagères. Pour augmenter les cadences de stockage et déstockage, on peut également prévoir que le dispositif de transfert et de stockage comporte deux convoyeurs ou plus,

Enfin, la présente invention concerne également un magasin, caractérisé en ce qu'il comporte :
- un dispositif de stockage et de transfert tel que décrit ci-dessus
- une zone de transfert disposée d'un premier côté du dispositif de transfert et de stockage destinée au transfert d'un bac ou similaire vers le dispositif de transfert et de stockage, et
- une zone de transfert disposée d'un côté opposé au premier côté du dispositif de transfert et de stockage destinée au transfert d'un bac ou similaire depuis le dispositif de transfert et de stockage vers un chariot.

Un tel magasin peut comporter en outre un poste de retournement permettant de faire pivoter à l'horizontale un bac ou similaire, un tel poste de retournement étant prévu sur l'une et/ou l'autre des zones de transfert.

Enfin, la présente invention concerne aussi un procédé de stockage et de déstockage d'une commande préparée dans un bac ou similaire, caractérisé en ce qu'il comporte les étapes suivantes :
- dépose du bac sur un convoyeur mobile au niveau d'un premier poste de transfert,
- déplacement du convoyeur mobile pour l'amener face à un logement d'une étagère, ledit logement étant muni d'un chemin de roulement monté pivotant autour d'un axe sensiblement horizontal entre une première position dite de repos et une seconde position dite de chargement/déchargement,
- transfert du bac du convoyeur vers le logement de l'étagère,
- retrait du convoyeur,
- amenée du convoyeur face au logement contenant le bac,
- action à l'aide d'un actionneur fixé au convoyeur sur un mécanisme afin de faire passer le chemin de roulement du logement de sa première position vers sa seconde position,
- transfert du bac depuis son logement vers le convoyeur,
- déplacement du convoyeur et du bac vers un second poste de transfert, et
- transfert du bac en vue de sa livraison.

Des détails et avantages de la présente invention apparaîtront mieux de la description qui suit, faite en référence au dessin schématique annexé sur lequel :
La figure 1 est une vue schématique de face illustrant un dispositif de stockage et de transfert,
La figure 2 est une vue de côté schématique du dispositif de stockage et de transfert de la figure 1,
La figure 3 est une vue en élévation de face plus détaillée illustrant un chargement dans un dispositif de stockage et de transfert,
La figure 4 est une vue similaire à la figure 1 illustrant un déchargement à partir du dispositif de stockage et de transfert,
Les figures 5A, 5B et 5C sont chacune une vue de dessus du dispositif de stockage et de transfert des figures précédentes dans trois configurations différentes,
La figure 6 est une vue d'un détail à échelle agrandie de la figure 4,
Les figures 7A et 7B sont des vues correspondant à la vue de la figure 6 pour une variante de réalisation dans deux positions distinctes, et
La figure 8 est une vue d'un chariot pouvant être utilisé en coopération avec un dispositif de stockage et de transfert des figures précédentes.

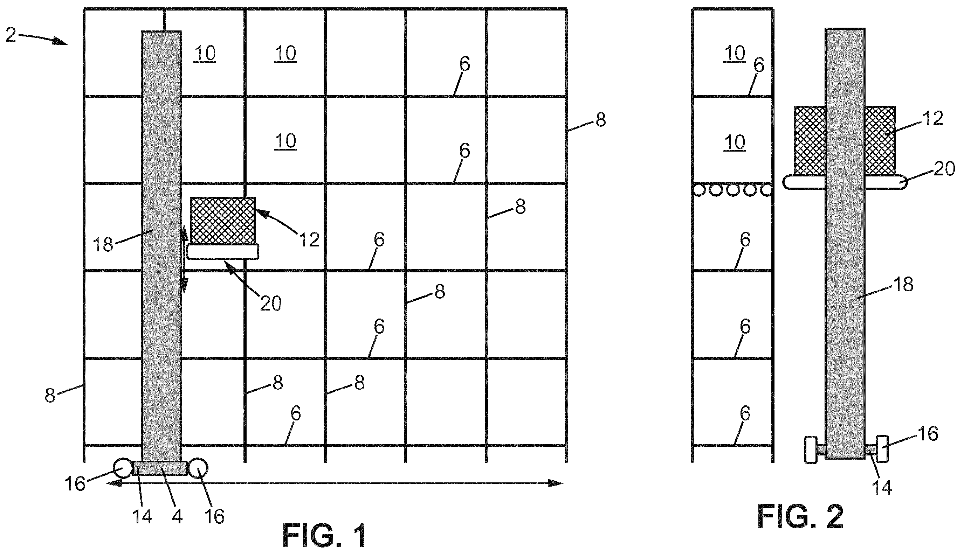

Les figures 1 et 2 illustrent schématiquement un dispositif de stockage et de transfert et son principe de fonctionnement. Ce dispositif comporte, d'une part, une étagère 2 et, d'autre part, un transporteur 4.

L'étagère 2 est un meuble, qui dans la forme de réalisation présentée est sur pieds. Elle comporte des tablettes 6 horizontales superposées ainsi que des montants 8 verticaux. Ces tablettes 6 et montants 8 définissent ainsi des logements 10 de taille adaptée pour recevoir un bac 12. Dans l'exemple montré sur la figure 1 à titre purement illustratif et non limitatif, l'étagère 2 comporte trente logements 10 répartis sur cinq niveaux. L'homme du métier comprendra que la taille des logements et leur nombre dépend de la taille des bacs et donc également des objets destinés à venir prendre place dans ces bacs.

Le transporteur 4 est destiné à disposer un bac 12 dans n'importe quel logement 10 ou à l'y récupérer. Dans la forme de réalisation illustrée, ce transporteur 4 présente un châssis 14 muni de roues 16. Le châssis 14 est motorisé et porte un mât 18 s'étendant verticalement. Un convoyeur 20 se déplace le long du mât 18. Le convoyeur 20 est muni d'un tapis roulant qui est guidé sur deux rouleaux parallèles motorisés permettant ainsi de convoyer un bac 12 (ou bien sûr tout autre type d'objet) selon une direction horizontale transversale par rapport à la direction de déplacement du transporteur 4, dans les deux sens possibles.

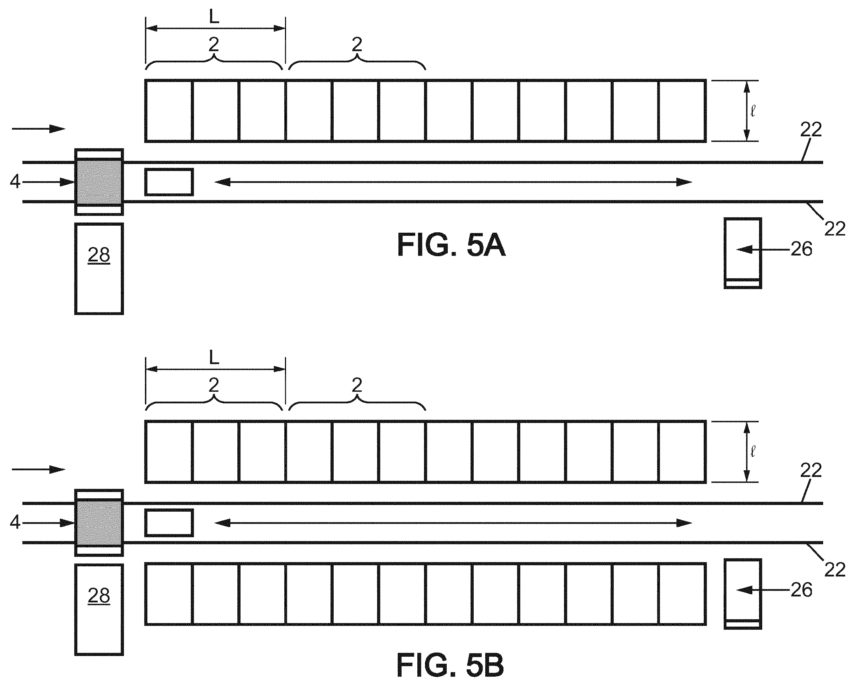

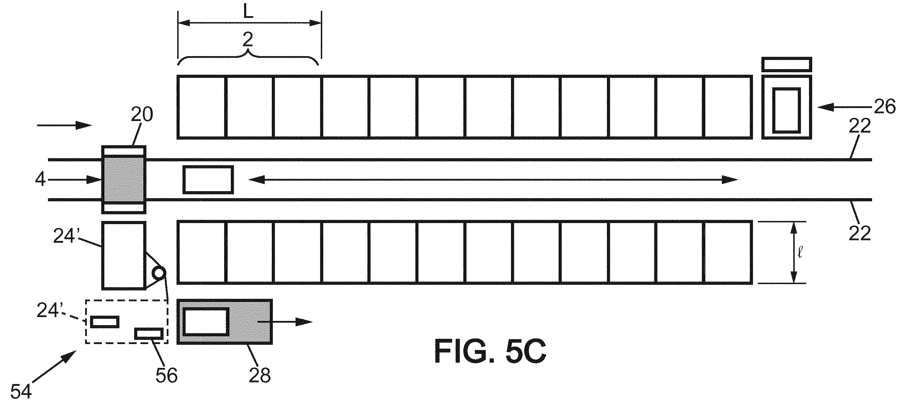

Le transporteur 4 est bien entendu adapté à l'étagère 2, ou inversement. Tout d'abord, on remarque que les logements 10 de l'étagère 2 présentent tous une ouverture permettant d'y accéder et que d'un même côté de l'étagère 2, toutes les ouvertures sont dans un même plan vertical. Le transporteur 4 est prévu pour se déplacer parallèlement à ce plan vertical contenant les ouvertures des logements 10 de l'étagère 2. Pour le déplacement horizontal du transporteur 4, les roues 16 sont par exemple guidées par des rails 22 (figure 5) qui s'étendent parallèlement à l'étagère 2. La hauteur du mât 18, la taille du convoyeur 20, etc. sont également adaptées à la hauteur de l'étagère 2, à la taille des logements 10 et/ou des bacs 12 destinés à y prendre place, etc...

Sur la figure 2, de manière très schématique, un logement 10 est représenté équipé d'un chemin de roulement 24. En fait, dans une forme de réalisation préférée, tous les logements 10 sont équipés d'un chemin de roulement 24.

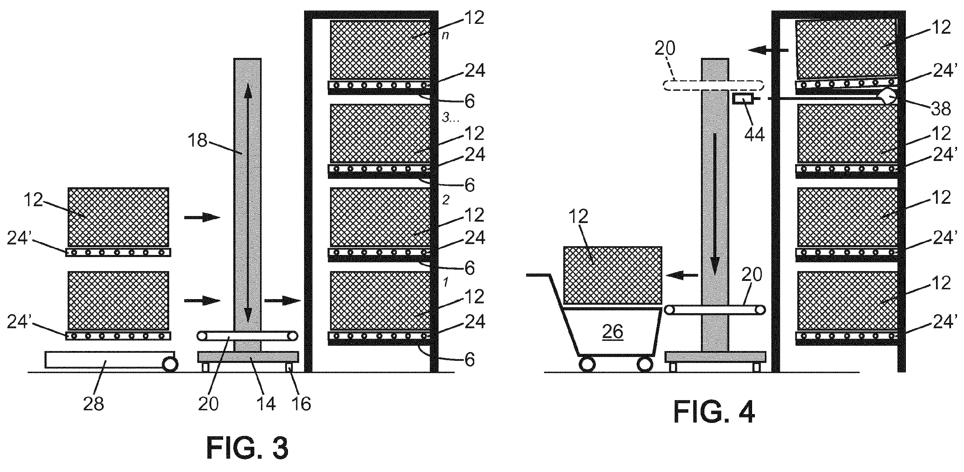

Les figures 3 et 4 illustrent un principe de fonctionnement d'un dispositif de stockage et de transfert illustré sur les figures 1 et 2.

On prend comme exemple ici un magasin d'un commerce connu sous le nom de "drive". Ici des clients choisissent sur Internet, en ligne, les produits qu'ils souhaitent acheter. Il s'agit des produits que l'on trouve habituellement dans un supermarché ou hypermarché avec notamment des produits alimentaires, mais pas uniquement. Une fois la commande passée et réglée, les articles commandés sont préparés et sont disposés dans un chariot de livraison 26 (figure 4). Lorsque le client arrive au magasin, le chariot de livraison 26 est amené jusqu'à sa voiture et le transfert des articles est effectué.

Le dispositif proposé ici permet de gérer les commandes des clients entre le moment où tous les articles ont été collectés et le moment où le client vient les récupérer.

De manière classique, lorsqu'une commande est reçue, les articles commandés sont collectés dans un bac 12. Généralement, la taille d'un bac 12 est adaptée à la taille des commandes habituelles et les commandes nécessitant d'utiliser deux bacs 12 sont minoritaires. On supposera donc ici qu'à chaque bac 12 correspond une commande d'un client. Le volume du bac est par exemple compris entre quelques litres et 200 l.

Un opérateur se déplace alors par exemple dans un magasin dans lequel sont stockés les articles proposés à la vente. Il est équipé d'un chariot de préparation de commande 28 qui peut être un chariot motorisé ou non. Selon une forme de réalisation préférée, il s'agit d'un chariot motorisé tel le chariot de préparation de commande illustré sur la figure 8 et décrit plus loin.

Dans l'exemple de réalisation qui suit, on supposera que le chariot de préparation de commande 28 est prévu pour préparer deux commandes à la fois et il comporte deux niveaux, chacun recevant un bac 12. Dans une forme de réalisation préférée, le chariot de préparation de commande 28 présente deux chemins de roulement 24' disposés par exemple l'un au-dessus de l'autre.

Le chariot de préparation de commande 28 est amené à un poste de transfert/déchargement aménagé par exemple à proximité d'une extrémité des rails 22 du transporteur 4. Ce dernier est alors amené face au chariot de préparation de commande 28 et le convoyeur 20 est placé à hauteur d'un bac 12 à décharger. Le bac 12 est posé sur un chemin de roulement 24'. Pour éviter qu'il ne roule sur ce chemin de roulement 24', il est prévu un système de verrous non représenté. Il peut s'agir ici simplement de deux loquets mobiles en rotation entre une position de verrouillage et une position de déverrouillage, le bac à maintenir en position venant prendre place entre les deux loquets lorsque ceux-ci sont en position de verrouillage. Les deux loquets peuvent être reliés par une tringle qui forme aussi l'axe de rotation des loquets. Ainsi, en actionnant un loquet, l'autre est automatiquement actionné également. Les deux loquets sont alors aussi toujours dans un même état (verrouillé ou déverrouillé).

Lorsque le convoyeur 20 est à bonne hauteur et que le système de verrouillage est dans sa position déverrouillée, le bac 12 est poussé en direction du convoyeur 20. Même si le poids du bac 12 est important, grâce au chemin de roulement 24', l'effort à exercer est faible pour initier le déplacement du bac 12 vers le convoyeur 20. Dès que le bac 12 arrive au contact du convoyeur 20, ce dernier vient entrainer le bac 12 jusqu'à ce qu'il soit entièrement sur le convoyeur 20. Le bac 12 est alors transporté sur le convoyeur 20 jusqu'à se trouver face au logement 10 dans lequel il doit prendre place. Une fois en place face au logement 10, le convoyeur 20 est remis en marche pour diriger le bac 12 vers le logement 10. Pour garantir un bon positionnement du bac 12 dans son logement 10, il est prévu que le chemin de roulement 24 du logement 10 soit légèrement incliné par rapport à l'horizontale de manière à entrainer le bac 12 vers le fond du logement 10. Le fond du logement peut être par exemple fermé par une paroi (opposée donc à l'ouverture par laquelle le bac 12 a été introduit dans le logement 10). Il est aussi possible de prévoir simplement une butée qui peut prendre une forme quelconque : barre transversale, butoir, ....

La figure 4 illustre le retrait d'un bac 12 hors d'un logement 10 pour le livrer au client.

Le convoyeur 20 est alors tout d'abord conduit face au logement 10 contenant le bac 12 à récupérer.

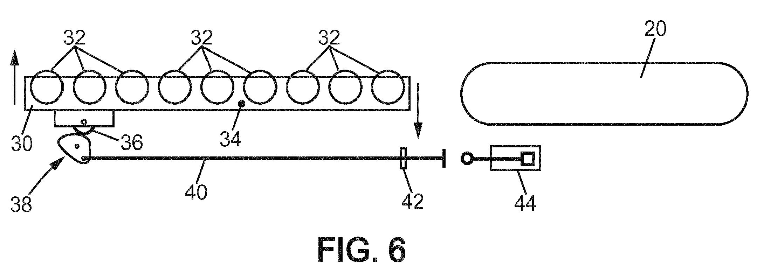

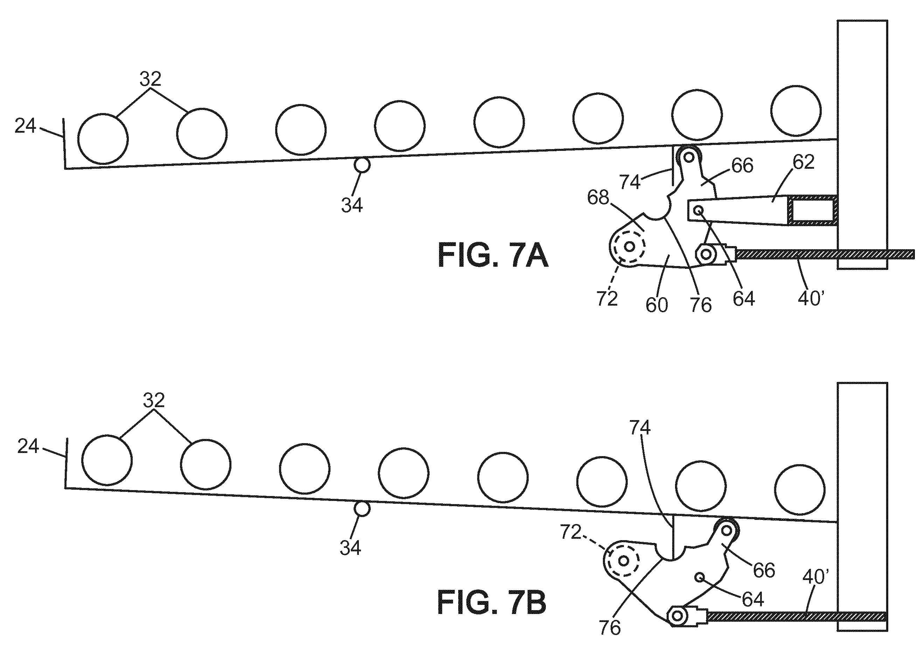

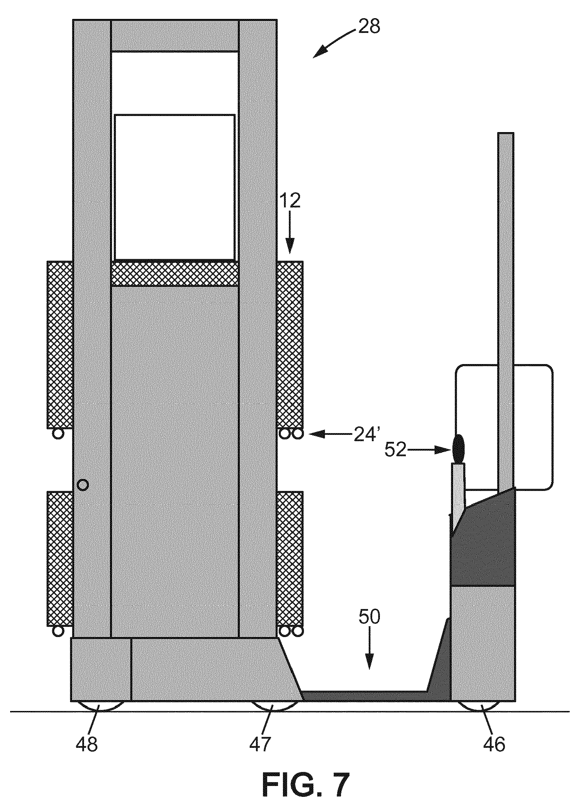

Il est alors proposé de faire glisser le bac 12 à récupérer sur le convoyeur 20. Pour ce faire, comme suggéré en haut à droite de la figure 4, le chemin de roulement 24 est incliné vers le convoyeur 20 (ou l'ouverture du logement 10). Deux variantes d'un mécanisme permettant de réaliser cette inclinaison sont illustrées sur les figures 6 et 7A, B et sont décrites plus loin. Le bac 12 glisse alors par gravité jusqu'à venir au contact du tapis du convoyeur 20. Il est alors entrainé par ce tapis (en mouvement) jusqu'à venir reposer d'aplomb sur le convoyeur 20. Le transporteur 4 apporte alors le bac 12 vers une zone de livraison et le bac 12 est alors chargé sur un chariot de livraison 26.

Sur la figure 5A, qui est une vue de dessus schématique, il est prévu d'avoir une zone de transfert/déchargement à gauche et d'avoir une zone de transfert/livraison à droite. Il est aussi proposé sur cette figure de disposer côte à côte des étagères 2 comportant chacune trois colonnes de logements. La longueur L d'une étagère et sa largeur ℓ sont adaptées en fonction de la taille des bacs 12 à ranger dans les logements 10.

La figure 5B représente une variante de réalisation de la figure 5A. Il est proposé ici d'avoir des étagères 2 de part et d'autre du transporteur 4. La solution proposée ici permet une optimisation de l'espace comme il apparaitra clairement à l'homme du métier.

La figure 5C présente encore une autre variante de réalisation. Cette variante est basée sur la forme de réalisation de la figure 5B mais pourrait aussi être adaptée à la forme de réalisation de la figure 5A avec des étagères se trouvant d'un seul côté du transporteur 4. Dans cette forme de réalisation, le chariot de préparation de commande 28 arrive au niveau de la zone de transfert destinée à son déchargement dans une position telle que les bacs 12 qu'il transporte sont orientés à 90° de la position qu'ils doivent prendre sur le convoyeur 20 (et dans les logements 10). Il est alors prévu un poste de retournement 54. Ce dernier comporte par exemple un chemin de roulement 24' similaire à un chemin de roulement 24 d'une étagère 2. Ce second chemin de roulement 24' est monté pivotant de manière à pouvoir pivoter de 90° en restant dans un même plan horizontal. Pour pivoter, ce second chemin de roulement 24' est monté sur au moins une roue motorisée 56 tout en étant relié à un pivot retourneur 58.

Dans le cas où un chariot 28 peut transporter plusieurs bacs 12, on peut prévoir que le poste de retournement 54 comporte autant de chemins de roulement 24' superposés qu'il peut y avoir de bacs 12 sur un chariot 28.

Le fonctionnement avec ce poste de retournement 54 est par exemple le suivant. Un chariot de commande 28 est amené face au poste de retournement 54. Un opérateur commande alors la rotation à 90° de la structure portant les deux chemins de roulement 24' superposés et situés à des niveaux adaptés à la position des bacs 12 sur le chariot 28.

En fin de rotation, lorsque la structure avec les deux chemins de roulement 24' se trouve dans le prolongement arrière du chariot, l'opérateur pousse les deux bacs sur les chemins de roulement 24'. Ils sont alors retenus par une barrière actionnée par un vérin électrique (non représentés). Il demande ensuite le retour à 90° de la structure portant les deux chemins de roulement 24' (et par exemple un ou deux bacs 12). Les chemins de roulement 24' sont inclinés par rapport à l'horizontale pour que les bacs 12 viennent en contact avec la barrière par gravité. Les bacs 12 sur les chemins de roulement 24' sont alors alignés avec le convoyeur 20 du transporteur, prêts à être déchargés. Lorsque le convoyeur est à bonne hauteur, l'actionneur efface la barrière qui maintenait le bac à décharger sur le chemin de roulement 24' et libère le bac 12 qui est réceptionné par le convoyeur 20 pour être stocké dans son logement 10 de destination.

Différentes variantes du poste de retournement peuvent être envisagées. L'angle de retournement pourrait être différent de 90°. Si l'orientation du bac dans le logement 10 est importante, une rotation de 180° est par exemple envisageable. Une rotation de 270° peut aussi être envisagée de même que toutes les valeurs angulaires intermédiaires.

Bien entendu, un poste de retournement peut aussi être envisagé au niveau de la zone de transfert utilisée pour la livraison des bacs 12 (avec le chariot de livraison 26.

La figure 6 illustre un mécanisme permettant de faire passer un bac 12 d'un logement 10 vers le convoyeur 20. On reconnait sur cette figure un chemin de roulement 24 et le convoyeur 20.

De manière classique, le chemin de roulement 24 est formé d'un cadre 30 dans lequel sont montés des rouleaux 32 disposés parallèlement les uns par rapport aux autres. Le cadre 30 est monté pivotant autour d'un axe 34 parallèle aux rouleaux 32.

Sous le cadre 30, par exemple en position médiane par rapport à la longueur des rouleaux 32, se trouve un galet 36 coopérant avec une came 38. Le galet 36 et la came 38 sont montés chacun pivotants autour d'un axe parallèle à l'axe 34. Le galet 36 est monté sur le cadre 30 tandis que la came 38 est montée sur l'étagère 2, par exemple sur une tablette 6 (en dessous de celle-ci). La came 38 est commandée à l'aide d'une tringle 40 qui s'étend sensiblement parallèlement au cadre 30, sous celui-ci. La came 38 est disposée près du fond d'un logement 10 et la tringle 40 s'étend vers l'ouverture du logement 10. La tringle 40 est par exemple guidée par un palier 42 de guidage fixé sous une tablette 6 (en position centrale par rapport à une ouverture d'un logement 10 si la came 38 et le galet 36 sont disposés en position médiane par rapport au chemin de roulement 24).

De manière tout à fait originale, il est proposé de commander la tringle 40, et donc la came 38, depuis le convoyeur 20, ou plus précisément à l'aide d'un actionneur qui peut être par exemple un vérin 44, pneumatique ou autre, solidaire du convoyeur 20. Un moteur, électrique de préférence, peut aussi être envisagé comme actionneur. On prévoit sur la figure 6 que lorsque le vérin 44 est en position rétractée, il n'agit pas sur la tringle 40. Le chemin de roulement 24 est dans une position de repos. Pour garantir cette position de repos, un balourd vers le fond du logement est prévu, de manière à ce que le galet 36 reste en appui sur la came 38. On remarque que sur la figure 6 l'axe 34 n'est pas centré par rapport au cadre 30. Il est décalé vers l'ouverture du logement 10 correspondant. On remarque en effet qu'il y a quatre rouleaux 32 d'un côté de l'axe 34 et cinq de l'autre. De plus, la présence du galet 36 permet de créer elle aussi un balourd vers le fond du logement 10. Si nécessaire, il est possible de prévoir aussi un ressort de rappel dans la position de repos du cadre 30, par exemple au niveau de l'axe 34.

Quand le vérin 44 est actionné, sa tige se déplace en direction de la tringle 40 et vient la pousser. Ce mouvement (essentiellement) de translation de la tringle 40 commande le pivotement de la came 38 qui est conformée de telle sorte que ce mouvement entraine une poussée vers le haut sur le galet 36 et donc sur l'arrière du cadre (la partie arrière étant considérée ici comme celle se trouvant au niveau du fond du logement correspondant.

Cette forme de réalisation (celle des figures 7 également) est simple car elle permet de n'avoir qu'un seul vérin pour commander tous les chemins de roulement 24 des logements 10.

Une variante de réalisation du mécanisme d'inclinaison illustré sur la figure 6 est représenté sur les figures 7A et 7B. On reconnait sur ces figures le chemin de roulement 24 avec ses rouleaux 32 et articulé autour de son axe 34 horizontal. Le mécanisme d'inclinaison illustré ici comporte lui aussi une tringle 40' qui interagit avec le vérin 44 (ou un autre actionneur) de la même manière que celle illustrée sur la figure 6. Il comporte en outre un ensemble basculant.

L'ensemble basculant comporte deux flasques 60 symétriques reliés par des axes. Chaque flasque 60 est par exemple réalisé à partir d'une tôle découpée de manière à présenter une forme globale en L. Les deux flasques 60 sont disposés dans un plan sensiblement vertical, perpendiculaire à l'axe 34. Les vues 7A et 7B ne permettent de voir à chaque fois un seul flasque 60. Chaque flasque 60 est monté pivotant sur un support 62, éventuellement commun aux deux flasques 60, fixé (par exemple soudé) sur la structure de l'étagère 2 correspondante. Les fixations des flasques 60 sur leur support 62 définissent un axe d'articulation 64.

Chaque flasque 60 présentant une forme en L, il présente un premier bras 66 et un second bras 68. L'axe d'articulation 64, dans la forme de réalisation représentée, coupe les flasques 60 sensiblement à mi-hauteur des premiers bras 66. Les extrémités des premiers bras 66 sont reliées par un axe portant au moins une roulette 70 qui est destinée à venir en contact avec le chemin de roulement 24, le cadre de ce dernier venant par exemple en appui sur la (les) roulette(s) 70.

Les seconds bras 68 sont quant à eux reliés par un autre axe qui porte au moins un contrepoids 72.

Le L des flasques 60 est orienté de telle sorte que le premier bras 66 soit tourné vers le chemin de roulement 24 (donc vers le haut puisque l'ensemble basculant est disposé sous ledit chemin de roulement) et de telle sorte que le second bras 68 soit orienté à l'opposé du convoyeur 20, et donc de la tringle 40'.

L'ensemble basculant peut pivoter entre deux positions qui sont chacune stables. Il est placé entre l'axe 34 et le convoyeur 20 (ou le transporteur 4). Dans la première position, dite de repos, le premier bras 66 est légèrement incliné par rapport à la verticale du côté opposé au convoyeur 20 (ou au transporteur 4) : une droite dans un plan vertical passant par l'axe d'articulation 64 et par l'axe portant la (les) roulette(s) 70 est légèrement incliné. Une butée 74 se présentant par exemple sous la forme d'une tôle fixée sous le chemin de roulement, parallèlement aux rouleaux 32 est prévue pour recevoir la (les) roulette(s) 70 en appui dans la position de repos du chemin de roulement 24. Cette position est stable car du fait de l'inclinaison du premier bras 66, lorsque l'ensemble basculant est pivoté pour éloigner la (les) roulettes de la butée 74, il faut légèrement soulever le chemin de roulement 24. On réalise ainsi un point dur dans le mouvement pivotant de l'ensemble basculant.

Pour avoir une seconde position stable de l'ensemble basculant, il est prévu que la butée 74 vienne en appui sur une zone concave 76 ménagée à la jonction entre le premier bras 66 et le second bras 68. Ici la butée 74 est utilisée pour la stabilité des deux positions stables de l'ensemble basculant. Il est clair que des moyens distincts pourraient permettre d'obtenir la stabilité dans la seconde position.

Lorsqu'un logement 10 est vide et qu'il va recevoir un bac, son chemin de roulement 24 est dans la position dite de repos, c'est-à-dire incliné à l'opposé du transporteur 4. Lorsque le convoyeur 20 arrive face au logement 10, il se positionne pour être au moins à la hauteur de l'extrémité du chemin de roulement 24 la plus élevée, c'est-à-dire aussi la plus proche du convoyeur 20. Ce dernier peut alors transférer le bac 12 qu'il porte vers le logement 10 en le faisant rouler tout d'abord sur le convoyeur seul, puis sur le convoyeur et le chemin de roulement puis enfin sur le chemin de roulement seul. Compte tenu de l'inclinaison du chemin de roulement 24, le bac 12 est conduit par gravité vers l'extrémité du chemin de roulement 24 opposée au convoyeur 20. Il arrive alors en butée au bout du chemin de roulement. La butée peut être intégrée au chemin de roulement 24, ou bien à l'étagère 2. Il peut aussi par exemple s'agir d'un mur contre lequel se trouverait l'étagère 2.

Pour récupérer un bac 12 se trouvant dans un logement 10, le convoyeur 20 vient face au logement 10 mais dans une position un peu plus basse que celle décrite plus haut pour le chargement du logement 10. La position du convoyeur 20 est telle que le vérin 44 puisse coopérer avec la tringle 40 ou 40'. Lorsque le vérin 44 est actionné, il agit sur la tringle (40 ou 40') qui vient faire pivoter la came 38 (figure 6) ou l'ensemble basculant de la figure 7 (A et B). Le chemin de roulement 24 passe alors dans sa seconde position et par gravité, le bac 12 se trouvant dans le logement 10 roule vers le convoyeur 20 qui prend alors en charge le bac 12. Lorsque ce dernier est bien positionné sur le convoyeur 20, le vérin 44 se rétracte et le chemin de roulement 24 reprend sa première position.

La figure 8 illustre quant à elle une forme de réalisation préférée d'un chariot de préparation de commande 28. Ce chariot est par exemple prévu pour être manoeuvré par une unité centrale renseignée par un logiciel de gestion des commandes et un automate embarqué pour des fonctions subsidiaires, affecté au traitement de plusieurs commandes passées en ligne à un site marchand via l'internet ou via tout autre mode de communication. Un tel site marchand, comme connu, possède un (ou plusieurs) magasin(s) de stockage des produits proposés à la vente, chacun de ces magasins comportant des gondoles de stockage des produits ou équivalents, séparées par des allées de circulation. Typiquement, chaque gondole est formée d'une ossature porteuse et de plusieurs tablettes horizontales, portées par l'ossature porteuse. Les produits proposés à la vente sont stockés sur les tablettes horizontales.

Le chariot de préparation de commande 28 comprend un châssis rigide, à faible garde au sol, monté sur cinq roues à savoir deux roues avant 46, deux roues centrales 47 et une roue arrière 48 libre également. Les roues avant 46 et la roue arrière sont par exemple libres tandis que les deux roues centrales 47 sont motrices, chaque roue motrice possédant sa propre motorisation. Les deux roues forment ainsi le groupe de propulsion qui est connecté à l'unité centrale via l'automate embarqué et un variateur. Le groupe de propulsion est alimenté en énergie électrique par une source d'énergie électrique embarquée, rechargeable, formée de batteries électriques. L'automate permet via le variateur, des commandes de vitesses différentes à l'un ou l'autre élément du groupe de propulsion, permettant ainsi le changement de direction du chariot.

Le châssis du chariot est par exemple formé de deux longerons parallèles, horizontaux et réunis l'un à l'autre par des traverses avant et arrière. Ce chariot comprend également des flancs latéraux parallèles à sa direction d'avancement et des flancs avant et arrière transversaux à sa direction d'avancement. Sur ce châssis se trouve une plateforme formant un poste de pilotage 50 prévu pour recevoir un préparateur. Ainsi le préparateur est embarqué sur le chariot.

De manière attenante au poste de pilotage 50, le chariot comporte deux poignées 52 destinées à être tenues par le préparateur debout sur la plateforme lors du déplacement du chariot. Ces poignées 52 permettent au préparateur de sécuriser son équilibre. On prévoit avantageusement que l'absence de « présence » d'une main sur une seule poignée commande l'arrêt du groupe de propulsion.

Du côté de la plateforme opposé au côté présentant les poignées 52 de maintien et de sécurité, le chariot de préparation des commandes 28 est équipé d'un magasin prévu pour recevoir de manière amovible plusieurs bacs 12. Ces derniers sont disposés dans le magasin de manière superposée et chacun d'entre eux est prévu pour recevoir les articles de l'une des commandes que doit traiter le préparateur. La disposition d'un magasin équipé de plusieurs bacs 12 permet le traitement simultané de plusieurs commandes.

Comme on peut le voir sur la figure 8, le poste de pilotage 50 est ouvert latéralement de façon que le préparateur puisse accéder facilement aux produits rangés dans les gondoles. Pour le chariot objet de la figure 1, le préparateur se tient debout dans le poste de pilotage. Le magasin est situé à l'arrière du chariot 1. Selon une forme préférée de réalisation, le magasin est formé d'une ossature porteuse définissant, selon des niveaux de hauteurs successifs, plusieurs logements respectivement prévus pour recevoir de manière amovible les bacs 12. Chaque logement est ouvert tant vers l'avant que vers l'arrière afin de permettre le retrait ou la mise en place de chaque bacs 12 soit depuis l'arrière du chariot soit depuis le poste de pilotage 50.

Pour une meilleure coopération avec le transporteur 4, il est proposé ici que chaque bac 12 soit monté de manière coulissante dans son logement pour pouvoir notamment être tiré vers l'arrière ou poussé vers l'avant, selon la configuration choisie, par le préparateur en vue de l'introduction des différents articles commandés. Dans la forme préférée de réalisation, chaque logement comprend un fond horizontal prévu pour supporter le bac 12 correspondant. Ce fond horizontal est formé d'un chemin de roulement 24' formé par un cadre 30'et d'une succession de rouleaux 32' horizontaux portés par le cadre 30' et montés librement rotatifs dans ce dernier, chacun selon un axe géométrique perpendiculaire à la direction d'avancement du chariot. Avantageusement, le fond horizontal est monté de manière mobile en translation horizontale et à cet effet est porté de manière coulissante par des glissières horizontales fixées à l'ossature du magasin et s'étendant de manière parallèle à la direction d'avancement du chariot de préparation de commande 28. Une telle configuration a pour but de permettre de disposer le fond mobile horizontal en porte à faux arrière par rapport à l'ossature du magasin afin de faciliter les opérations de chargement et déchargement des bacs 12 par l'arrière du magasin. En position usuelle d'utilisation, le fond mobile occupe une position rétractée dans l'ossature du magasin.

De préférence, chaque glissière présente une butée avant d'extrémité pour éviter que le fond horizontal du logement ne pénètre dans le poste de pilotage 50. De plus, chaque glissière présente une butée arrière apte à limiter le mouvement vers l'arrière du fond de chaque logement et par voie de conséquence l'importance du porte à faux arrière.

À chaque logement sur le chariot de préparation de commande 28 est associé un moyen de verrouillage apte en position verrouillage à maintenir le bac 12 sur son chemin de roulement 24', ce moyen de verrouillage étant manoeuvrable depuis le poste de pilotage 50. Ce moyen de verrouillage peut être constitué par un axe traversant longitudinalement le cadre 30' avec une une poignée rotative en bout d'axe, manoeuvrable depuis le poste de pilotage 50 et une butée perpendiculaire à l'axe du côté opposé à la poignée rotative. En position de travail, la butée est disposée sur la trajectoire du bac 12 pour maintenir ce dernier en position usuelle d'utilisation. En position de livraison du bac 12 vers le transporteur 4, ou tout autre lieu de stockage, le préparateur déverrouille la butée par rotation d'un quart de tour de la poignée rotative, libérant ainsi le bac 12 qui peut alors être poussé vers l'extérieur vers le convoyeur 20.

Le dispositif de stockage et de transfert proposé ici permet avec des moyens simples d'optimiser la gestion des commandes préparées dans un magasin d'un site marchand. Bien entendu, ce dispositif peut aussi trouver des applications dans un site industriel pour la préparation de lots de pièces ou pour la réalisation de lots divers -pièces détachées, sous-ensembles de montage, ....

Le système proposé ici présente aussi l'avantage d'être peu encombrant. Il est aussi souple d'emploi. En effet, il peut s'adapter à de nombreux styles de gestions. Les préparations de commandes peuvent être gérées d'un côté et les livraisons de l'autre.

Le système décrit en référence aux figures comporte un transporteur avec un seul convoyeur. Il peut être envisagé d'avoir au moins deux convoyeurs pour augmenter la productivité du système. Avec deux convoyeurs, on pourrait par exemple prévoir que les deux convoyeurs sont montés sur un même mât 18 ou bien avoir deux ensembles distincts formés chacun d'un mât et d'un convoyeur.

Bien entendu, la présente invention ne se limite pas à la forme de réalisation préférée décrite ci-dessus et illustrée à titre d'exemple non limitatif sur le dessin et aux variantes évoquées, mais elle concerne également toutes les variantes de réalisation à la portée de l'homme du métier dans le cadre des revendications ci-après.

## Revendications

1. Dispositif de stockage et de transfert de bacs (12) comportant :
- une étagère (2) présentant des logements (10) disposés côte à côte sur au moins deux niveaux et destinés chacun à recevoir un bac (12) par une ouverture de chargement/déchargement, chaque logement (10) comportant un chemin de roulement (24) monté pivotant autour d'un axe (34) sensiblement horizontal et inclinable entre une première position dite de repos et une seconde position inclinée vers l'ouverture de chargement/déchargement,
- des moyens (4) permettant d'apporter un bac (12) face à un logement (10), comportant, d'une part, un convoyeur (20) mobile permettant de déplacer un bac (12) dans une direction sensiblement horizontale et, d'autre part, des moyens permettant de déplacer le convoyeur (20) dans un plan sensiblement perpendiculaire à la direction de déplacement d'un bac (12) sur le convoyeur (20),
**caractérisé en ce que** le convoyeur (20) mobile est pourvu d'un actionneur (44), et **en ce qu'**à chaque chemin de roulement (24) est associé un mécanisme d'inclinaison permettant de faire passer le chemin de roulement (24) correspondant de sa première position à sa seconde position, ledit mécanisme étant muni de moyens de coopération (40, 40') avec l'actionneur (44).

2. Dispositif de stockage et de transfert selon la revendication 1, **caractérisé en ce que** le mécanisme d'inclinaison comporte un ensemble basculant disposé sous le chemin de roulement (24) et monté mobile en rotation par rapport à un axe parallèle à l'axe (34) du chemin de roulement (24), le chemin de roulement venant en appui ledit ensemble basculant formant une came de telle sorte que lorsqu'il passe d'une première position angulaire à une seconde position angulaire il commande le passage du chemin de roulement (24) de sa première position dite de repos à sa seconde position.

3. Dispositif de stockage et de transfert selon la revendication 2, **caractérisé en ce que** le mécanisme d'inclinaison est en outre muni d'une tige de commande reliée à l'ensemble basculant et destinée à coopérer avec l'actionneur (44).

4. Dispositif de stockage et de transfert selon l'une des revendications 1 à 3, **caractérisé en ce que** le mécanisme d'inclinaison comporte un contrepoids (72) tendant à le ramener dans sa première position angulaire correspondant à la position de repos du chemin de roulement (24).

5. Dispositif de transfert et de stockage selon l'une des revendications 2 ou 3, **caractérisé en ce que** l'ensemble basculant est une came (38).

6. Dispositif de transfert et de stockage selon l'une des revendications 2 ou 3, **caractérisé en ce que** l'ensemble basculant présente deux flasques (60) latéraux parallèles reliés entre eux par au moins un axe portant au moins une roulette (70) destinée à venir en contact avec le chemin de roulement (24).

7. Dispositif de stockage et de transfert selon l'une des revendications 1 à 6, **caractérisé en ce que** les moyens permettant de déplacer le convoyeur (20) comportent un chariot mobile horizontalement selon une direction et portant un mât (18) vertical le long duquel le convoyeur (20) peut se déplacer.

8. Dispositif de stockage et de transfert selon la revendication 7, **caractérisé en ce que** le chariot mobile horizontalement se déplace sur des rails (22).

9. Dispositif de transfert et de stockage selon l'une des revendications 1 à 8, **caractérisé en ce qu'**il comporte en outre un chariot motorisé (28) présentant :
- un châssis sur lequel est ménagée une plateforme (50) permettant de recevoir un opérateur,
- des moyens de commande (52) disposés d'un côté de la plateforme (50), et
- du côté de la plateforme opposé au côté muni des moyens de commande, au moins deux logements disposés l'un au-dessus de l'autre et munis chacun d'un chemin de roulement (24') et de moyens de blocage pour un bac disposé sur le chemin de roulement (24').

10. Dispositif de transfert et de stockage selon la revendication 9, **caractérisé en ce que** chaque chemin de roulement (24') du chariot (28) est monté sur des glissières de manière à pouvoir se déplacer entre une position dite de transport dans laquelle le chemin de roulement (24') est au-dessus du châssis et une position dite de transfert dans laquelle le chemin de roulement est en porte-à-faux à l'extérieur du châssis.

11. Dispositif de transfert et de stockage selon l'une des revendications 1 à 10, **caractérisé en ce qu'**il comporte deux étagères (2) disposées en vis-à-vis, les moyens (4) permettant d'apporter un bac face à un logement étant disposés entre les deux étagères (2).

12. Dispositif de transfert et de stockage selon l'une des revendications 1 à 11, **caractérisé en ce qu'**il comporte au moins deux convoyeurs (20).

13. Magasin, **caractérisé en ce qu'**il comporte :
- un dispositif de stockage et de transfert selon l'une des revendications 1 à 12,
- une zone de transfert disposée d'un premier côté du dispositif de transfert et de stockage destinée au transfert d'un bac ou similaire vers le dispositif de transfert et de stockage, et
- une zone de transfert disposée d'un côté opposé au premier côté du dispositif de transfert et de stockage destinée au transfert d'un bac ou similaire depuis le dispositif de transfert et de stockage vers un chariot.

14. Magasin selon la revendication 13, **caractérisé en ce qu'**il comporte en outre un poste de retournement permettant de faire pivoter à l'horizontale un bac ou similaire, un tel poste de retournement étant prévu sur l'une et/ou l'autre des zones de transfert.

15. Procédé de stockage et de déstockage d'une commande préparée dans un bac ou similaire, **caractérisé en ce qu'**il comporte les étapes suivantes :
- dépose du bac sur un convoyeur mobile au niveau d'un premier poste de transfert,
- déplacement du convoyeur mobile pour l'amener face à un logement d'une étagère, ledit logement étant muni d'un chemin de roulement monté pivotant autour d'un axe sensiblement horizontal entre une première position dite de repos et une seconde position dite de chargement/déchargement,
- transfert du bac du convoyeur vers le logement de l'étagère,
- retrait du convoyeur,
- amenée du convoyeur face au logement contenant le bac,
- action à l'aide d'un actionneur fixé au convoyeur sur un mécanisme afin de faire passer le chemin de roulement du logement de sa première position vers sa seconde position,
- transfert du bac depuis son logement vers le convoyeur,
- déplacement du convoyeur et du bac vers un second poste de transfert, et
- transfert du bac en vue de sa livraison.
